# EUROPEAN PATENT SPECIFICATION

(11) **EP 2 691 221 B1**
(45) Date of publication and mention of the grant of the patent: **03.02.2016**
(21) Application number: 12717832.5
(22) Date of filing: 20.03.2012
(51) Int. Cl.: B29C 41/04, B65H 54/48, B29C 41/38, B29C 41/20, B29C 33/40, B29C 33/50, B29C 33/38, B29C 70/58

(54) **METHOD FOR PRODUCING A FINISHED THREAD-GUIDING GROOVED CYLINDER IN COMPOSITE MATERIAL OF PLASTIC ORIGIN FOR SPOOLING MACHINES IN THE TEXTILE INDUSTRY AND THREAD-GUIDING GROOVED CYLINDER**
VERFAHREN ZUR HERSTELLUNG EINER FADENFÜHRENDEN NUTENTROMMEL AUS EINEM KUNSTSTOFF-VERBUNDWERKSTOFF FÜR SPULMASCHINEN DER TEXTILINDUSTRIE SOWIE NUTENTROMMEL
PROCÉDÉ DE PRODUCTION D'UN CYLINDRE RAINURE DE VA-ET-VIENT EN COMPOSITE EN PLASTIQUE POUR L'INDUSTRIE TEXTILE ET CYLINDRE RAINURE

(30) Priority: 31.03.2011 IT TV20110044
(43) Date of publication of application: 05.02.2014
(73) Proprietor: Nimei Seiki Co., Ltd., Toki-city, Gifu 509-5142 (JP)
(72) Inventor: CESARATTO, Ennio, 33170 Pordenone (PN) (IT)
(74) Representative: Hoffmann Eitle
(86) International application number: PCT/IB2012/000555
(87) International publication number: WO 2012/131457

(56) References cited:
- CN-A- 1 562 524
- CN-Y- 201 040 672
- GB-A- 992 268
- JP-A- 5 318 497
- JP-A- 54 099 164
- US-A- 3 806 053

## Description

This invention relates to a process for producing completely finished thread-guiding grooved cylinders, of polyurethane resin filled with aggregates with wear-resistant treatment, for textile spooling machines, cylindrical and conical with fixed-pitch or variable-pitch screws with two, two and a half, three turns.

### Field of the Invention

Spinning is conventionally translated into a series of operations that allow to transform the fibres into yarn. Spinning can be considered a complex process for treating wet yarns, dry yarns, semi-wet yarns, unbleached and bleached yarns with constantly improving characteristics of fineness, resistance and regularity. Spinning includes the so-called spooling phase, in which, independently of the spinning technique used, the thread of the fibre must be freed from the last impurities it still contains and rewound on a support suitable for its subsequent use. These are the spooling functions carried out on the spoolers. In the final analysis it is the last phase in the fibre spinning process before the fibre is supplied to the weaver or to the knitted fabric manufacturer.

Spooling is included in a processing phase that is made up of essential objectives, such as yarn slubcatching, in which flaws and impurities are identified and eliminated. Afterwards, yarn spooling, in which the spooling machines, equipped with grooved cylinders for guiding the threads, allow to wind the thread received from the continuous spinner in small bobbins on soft or hard conical or cylindrical reels of large sizes, for example with a diameter of about 18÷30 cm. Finally, yarn paraffining takes place, which is a necessary operation when it is expected to be used in knitwear.

Therefore, it is reasonable to consider as known that the thread-guiding grooved cylinders are used on the spooling machines of the textile sector, to carry out the yarn spooling operation, which more particularly consists in transferring the yarn from the initial packaging, tube or spool, onto a rigid cone in the shape of a crossed coil wound body. This processing is used for transferring the thread to a packaging more suitable for the subsequent processing operations.

### Prior art

The applicant pointed out that the present production cycle for the construction of the thread-guiding cylinder requires a very long production lead time with a series of very complex and expensive processing operations, such as: moulding of the unprocessed body in cast iron; turning, milling of the screws, pantographing of the head and tail ends, carried out on CNC and non-CNC machines. Radiusing, corner rounding, adjustments and super finishing operations on machines are also necessary. The cycle is completed by balancing and a subsequent heat or surface treatment.

Also within a patent literature search, thread-guiding cylinders to be used in the sector of the textile industry are known, and the documents found are the following:
D1 CN1086492 (Yi et al.)
D2 CN201040672 (Jian)
D3 CN2325363 (Chen et al.)
D4 CN2361606 (Che et al.)
More particularly, D1 describes a thread-guiding cylinder, in alloy, suitable for a double loom and a winding loom in the textile industry, and made of eutectic Zn-Al superplastic alloy whose main components are Al, Mg and a residue of Zn. Its characteristics are lightness, abrasion resistance, solidity and low costs. D2 describes a thread-guiding cylinder whose flat components flange and the inside of the cylinder are made of thermosetting plastic material for the whole internal cylinder. The internal cylinder and the external cylinder made of metal interfere with each other in such a way as to form an assembly. The production technology is substantially free from cutting, saving of material and work, with a high efficiency level. It reduces production costs and increases production capacity. D3 and D4 propose some solutions of thread-guiding cylinders in superplastic alloy.

Further thread-guiding cylinders and methods of manufacture are known from CN 100509211C and US3806053.

From everything mentioned above it is thus reasonable to consider as known:
□ A thread-guiding grooved cylinder in cast iron obtained by moulding and successively finished with finishing processes;
□ A cylinder in superplastic alloy that employs aluminium;
□ A cylinder in composite material whose internal cylinder is obtained from thermosetting resin and is combined with a metal external cylinder.

### Drawbacks

Above all with regard to thread-guiding cylinders in cast iron, it is pointed out that the shape of the screw on the cylinder determines the quantity and the quality of the reel formation. As a consequence, the complexity of the subsequent processing operations, made on several machine tools, is a phase that does not guarantee the realization of perfectly identical cylinders above all with respect to a standard reference sample. Such flaws may imply more or less evident flaws in the reel conformation.

Still, there also exists a design limit to improve the shape of the thread-guiding screw of the cylinder because bound by the shape of the tools and by the machine tools. Therefore, any realization of the cylinder carried out with the removal of shaving from workable materials different from cast iron, obtained through various production processes, would actually present the same problems as the present cylinder in cast iron.

### Summary of the invention

These and other aims are achieved by the present invention according to the characteristics as in the attached claims, solving the mentioned problems by a method for producing a thread-guiding grooved cylinder in composite material of plastic origin for spooling machines in the textile industry, grooved cylinder in composite material that requires at least the following phases:
a) the moulding of a RTV (Room Temperature Vulcanizing) silicone rubber cavity, contained in the casting mould;
b) the subsequent moulding of the thread-guiding grooved cylinder by injection casting catalyzed polyurethane resin filled with aluminium hydroxide at 70%, the centrifugation in the mould, and the catalysis, said thread-guiding grooved cylinder being provided with overmoulded inserts;
c) demoulding;
d) the application of a wear-resistant coating of hard nickel by electroforming and of hard chromium by galvanic process.

### Aims

In this way, by the considerable creative contribution the effect of which constitutes an immediate and not technical progress, various and important aims are achieved.

A first aim consisted in producing a finished thread-guiding grooved cylinder that does not need balancing, prior to wear-resistant treatment, because the process guarantees to reproduce cylinders with constant shape and size characteristics, with corner rounding and without moulding junctions.

A second aim is to improve and simplify the way of constructing and producing the thread-guiding cylinders used on the spooling machines of the textile sector, with a reasonable drop in production costs and times.

Another aim by means of the described production method enables to further modify the shape of the screws that will allow to improve both the shape of the reel and the amount of reels produced.

Finally, these advantages have the not negligible value of obtaining a production method and a thread-guiding grooved cylinder with a good technological content.

These and other advantages will appear from the following detailed description of a preferred embodiment with the aid of the enclosed schematic drawings whose details of execution are not to be considered limitative but only and exclusively illustrative.

### Content of the drawings

Fig. 1 is the representation of the empty mould used for moulding the RTV silicone rubber cavity and of the cylinder in polyurethane resin compound filled with aggregate.
Fig. 2 is the representation of the mould with the sample cylinder for moulding the RTV silicone rubber cavity inserted.
Fig 3 is the RTV silicone rubber cavity in the demoulding phase and after being turned over.
Fig. 4 represents the mould with the RTV silicone rubber cavity for moulding the finished cylinder in polyurethane resin compound filled with aggregate, provided with sectors for balancing release and with the wear-resistant metal inserts on the top and tail ends, fitted on the equipment for centrifuging the compound in the casting phase.
Fig. 5 is the silicone rubber cavity during the demoulding from the moulded cylinder and after being turned over.
Fig. 6 is the thread-guiding grooved cylinder with ceramic inserts before being glued.

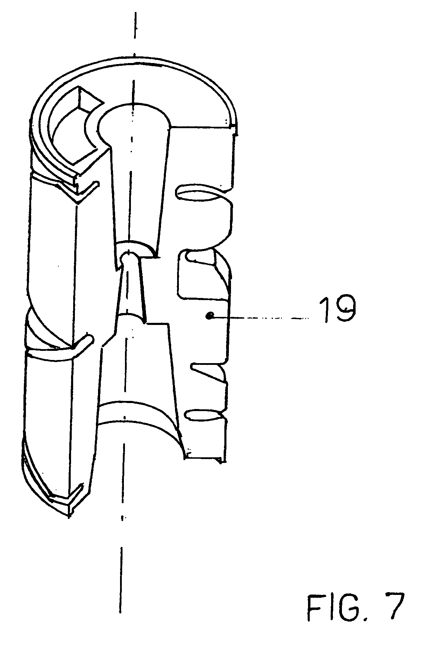

Fig. 7 is a section of the thread-guiding grooved cylinder

### Practical embodiment of the invention

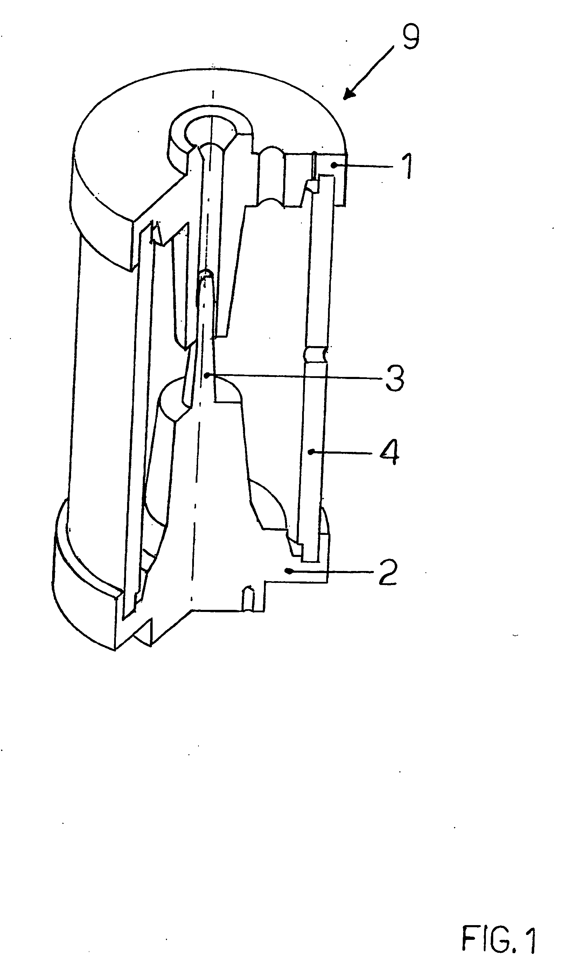

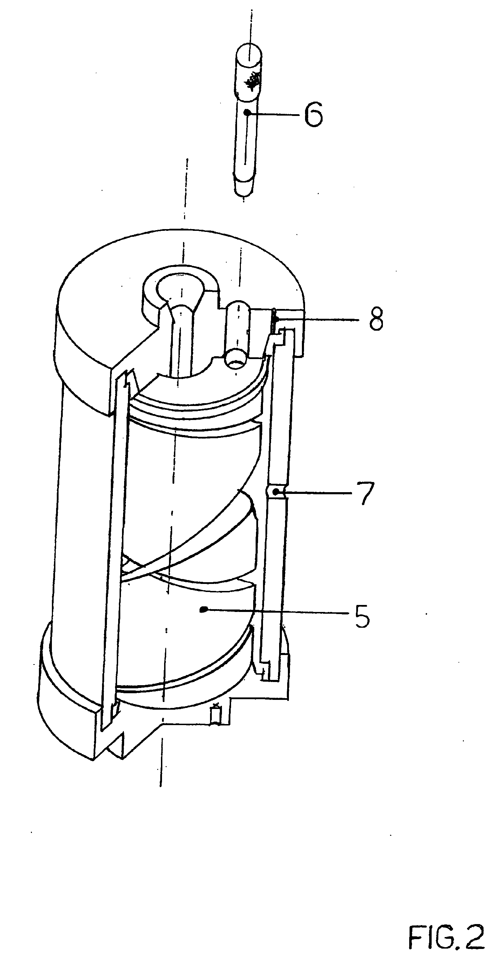

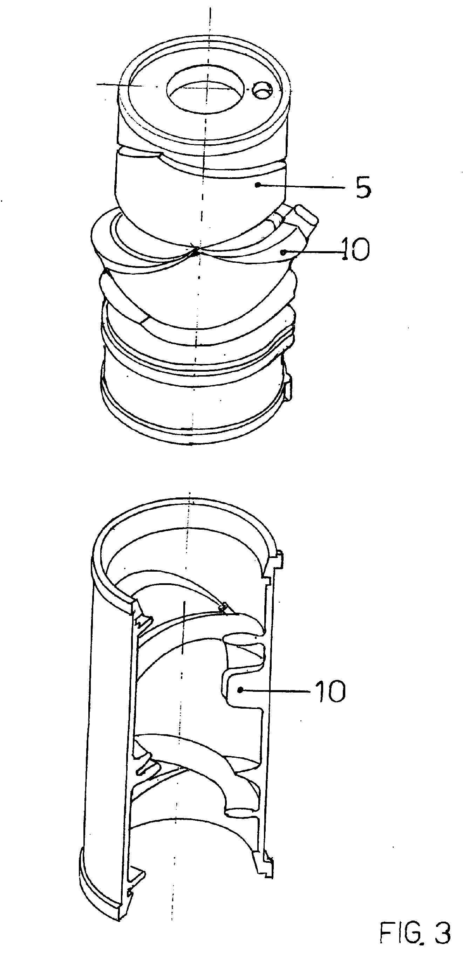

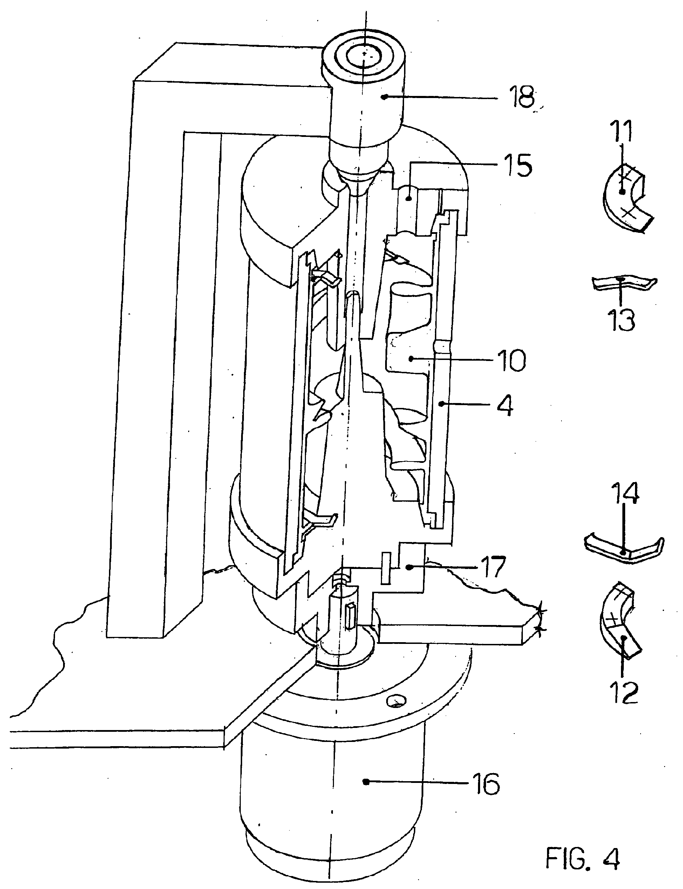

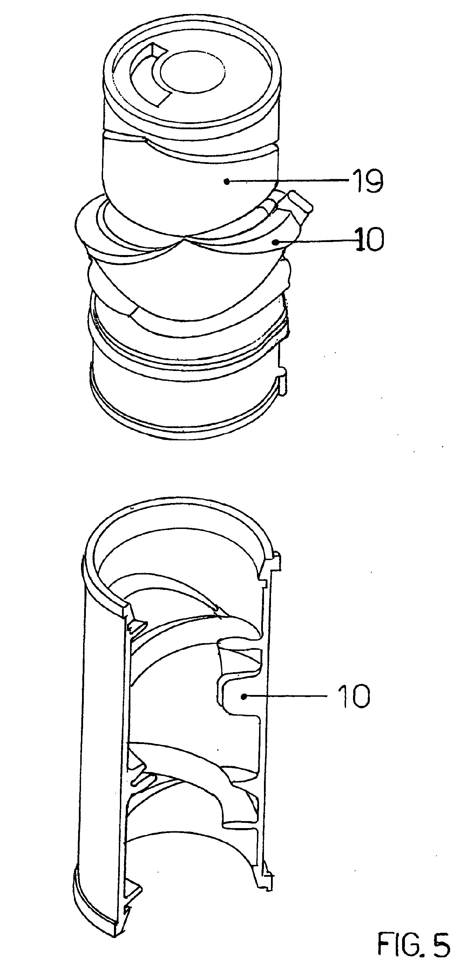

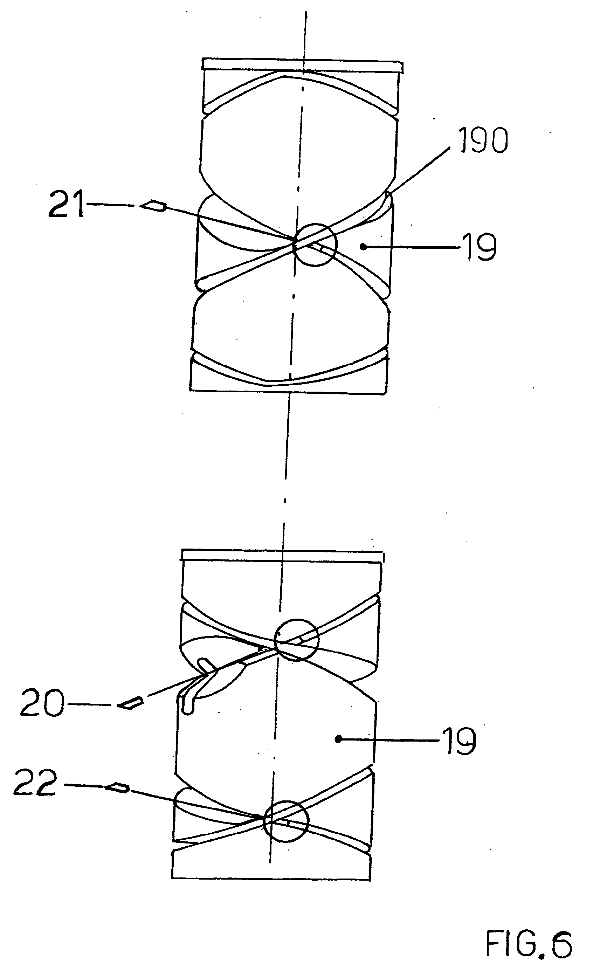

The process for producing at least one completely finished thread-guiding grooved cylinder (19) with thread-guiding screws (190) requires a cycle that comprises at least the following working phases (a, b, c, d), respectively:
Phase a): Moulding of the RTV silicone rubber cavity (10).
   One disassembles the upper flange (1) from the mould (9) (Fig. 1) and inserts the sample thread-guiding grooved cylinder (5) (Fig 2). One repositions the flange (1), rotating it so that the centering pin (6) places itself on the reference hole of the sample thread-guiding grooved cylinder (5). One rotates the flange (1) that by means of the pin (6) causes the sample thread-guiding grooved cylinder (5) to rotate, up to the reference provided for the locking to the central body (4). The RTV 5530 silicone rubber is prepared with the specific catalyst RTV 5530 B with a ratio of 100:100 in weight. The rubber is degassed and poured into the mould (9) until filling up the cavity, using the injection hole (7). The silicone rubber has the following characteristics: temperature of the compound 20°C. Temperature of the mould 20°C. Cross-linking time 24 hours. Degree of hardness after cross-linking from 20 to 40 Shore A, preferably 30 Shore A. After about 24 hours the flanges (1, 2) are disassembled from the central body (4). By means of an extruder piston one extracts from the central body (4) the sample thread-guiding grooved cylinder (5) embedded in the cross-linked RTV silicone rubber cavity (10). The demoulding of the RTV silicone cavity (10) (Fig. 3) is carried out by means of an operation of widening and of unwinding. The so obtained RTV silicone rubber cavity (10) can be used for moulding the resin cylinder (19). In a further preferred embodiment the RTV silicone rubber cavity (10), rather than being obtained in a single monolithic piece, can also be obtained in at least two or more parts that, joined to each other, are configured as one achieving said RTV silicone rubber cavity (10).
Phase b): Moulding in polyurethane resin filled at 70% with aluminium hydroxide.
   After disassembling the flanges (1, 2) from the central body (4) of the mould (Fig. 1) and applying on them the sectors (11, 12) (Fig. 4) that create on the sides of the cylinder the hollow for balancing, one applies the wax based release agent on all the internal surfaces of the mould. One positions the RTV silicone rubber cavity (10) inside the central body (4) in the suitable release sectors of reference. On the top and tail ends of the RTV silicone rubber cavity (10) one must insert the tempered plate inserts (13, 14). One reassembles and locks the flanges (1, 2) onto the central body (4). After placing the mould onto the driving joint (17) keyed to the driving axle (16), the rotating live centre (18) is lowered, in order to be able to carry out the centrifugation phases in safety. After preparing the polyurethane compound, made up of casting rigid polyurethane resin PC 26 filled with aggregates at 70% ± 5%, in a 70% solution, with aluminium hydroxide TLV-107/S-MES and catalyzed with hardener G 226 with a ratio of 100:100 on the resin, one injects through the casting hole (15) the quantity intended for filling up the mould and the motor (16) is started for a centrifugation phase with the cycloconverter at 3000 RPM for a time of about 120 seconds. After the centrifugation, the mould (9) has to be placed on the storage equipment to complete the catalysis for about 12 hours. After completing the catalysis, one disassembles the flanges (1, 2) from the central body (4) and by means of an extruder piston one extracts the moulded grooved cylinder (19) embedded in the RTV silicon rubber cavity (10). After extracting the moulded grooved cylinder (19) that is embedded in the RTV silicone rubber cavity (10), the latter must be removed by means of a demoulding phase.
   During the execution of phase (b) the samples of the process have been moulded in polyurethane compound filled with aluminium hydroxide at 70% and centrifuged to have a minimum dimensional variation (shrinkage) compatible with the subsequent wear-resistant treatment of phase (d). For the casting in the mould (9) one could also use pure resins without the addition of fillers, which would make the filling of the mould very easy but the shrinkages on the pieces after hardening would be so great as to considerably modify the sizes of the moulded piece with respect to the sample cylinder, and therefore would compromise the functionality of the moulded grooved cylinder (19). The problem could be solved by making oversized sample grooved cylinders according to the shrinkage of the resin used. The operation is not simple to carry out, due to the complexity of the shape of the cylinder (screws, radiuses etc.). Compounds with polyester resin and compounds with epoxy resin have been tested. Acrylic and polyvinyl resins could also be used for the same purpose, (with shrinkages and characteristics of the materials to be assessed), therefore all the materials that can be cast by gravity or by injection could be used for the moulding of the cylinder. On the RTV silicon rubber cavity (10) it is possible to position at least two tempered metal inserts (13, 14), one on the top end and one on the tail end. It is also possible to realize on all the crossings the undercut seats on which to insert and glue ceramic inserts (20, 21, 22) on all the crossings of the screws (190). Such inserts (13, 14, 20, 21, 22) are able to ensure the use of the moulded grooved cylinders (19) for the spooling of all the kinds of yarns that are spooled. Centrifugation, too, is decisive to obtain a very compact crown of compound on the external crown of the moulded grooved cylinder (19) with much filler and very little resin, while at the centre of the moulded grooved cylinder (19) we will have a compound with much resin and little filler. In principle a single RTV silicone rubber cavity (10) can be used various times in the execution of the same grooved cylinders (19) obtained by moulding and in this case said RTV silicone rubber cavity (10) has been tested for a repetition of about 30 pieces.
Phase c): The demoulding of the RTV silicone rubber cavity (10) (Fig 5) is carried out by means of an operation of widening and rolling, subsequently performing a visual inspection of the moulded grooved cylinder (19).
   After said phase (c), where provided, further phases can also be provided. A first substantially requires the possibility of gluing the crossing ceramic or metal inserts (20, 21, 22) if during the moulding of the moulded grooved cylinder (19) one used a sample with some pockets, obtained in correspondence of the crossings of the screws. In this hypothesis one applies the Araldite adhesive on the pockets of the crossings, (Fig 6) and then inserts the crossing ceramic or metal inserts (20, 21, 22) eliminating the exceeding adhesive clots. The catalysis of the adhesive is of 20 minutes at room temperature.
Phase d): the moulded grooved cylinder (19), once completed with the fixing of the crossing ceramic or metal inserts (20, 21, 22), is subjected to an electroforming and hard chromium plating process by a galvanic process. More particularly, one first prearranges the surface of the moulded grooved cylinder (19) performing a mechanical mordanting operation with Scotch-Brite or, as an alternative, with a bath in a hydrochloric acid solution. This operation eliminates the glossy surface film of resin from the moulded surface without changing the roughness and ensures the grip of the coating that will make the surface of the cylinder to be treated by copper and nickel electroforming conductive. In order to be able to carry out the electroforming treatment on the moulded grooved cylinder (19) and ensure an excellent quality result on the treated pieces, with respect to the classic treatment, normally made by firms according to what is stated in the technical documentation (TRATTATO DI GALVANOTECNICA II, E.BERTORELLE, HOEPLI EDITORE), the following operations have been carried out also introducing a specific expedient in the standard nickel electroforming process.
   1 d) The moulded grooved cylinder (19) is degreased by dipping in a solution of hydrochloric acid HCL and distilled water for 2 minutes and successively rinsed three times with running water. Composition of the solution:1000cc distilled water H₂O+20% hydrochloric acid HCL;
   2d) the moulded grooved cylinder (19) is dipped in a solution of 1000 cc distilled water H₂O, 45cc hydrochloric acid HCL, 3.3 grams tin chloride (II) SnCl₂ for 4 minutes to improve the grip of the subsequent copper and nickel deposit;
   3d) to make the surface of the moulded grooved cylinder (19) to be covered in the copper and nickel electroforming conductive, one sprays with a double-nozzle gun the specially elaborated solutions: Concentrated solution 1;
   4d) Into a 1000 cc phial one pours 500cc distilled water and 180 g silver nitrate melting it, and adds 280 cc ammonia NH₃ at 28%. One stirs everything and adds distilled water until reaching 1000cc. One stores the concentrated solution 1 in a dark glass bottle. Concentrated solution 2;
   5d) Into another 1000 cc phial one pours 500cc distilled water and adds 100 g caustic soda NaOH, stirs everything generating an exothermic reaction. After the cooling of the solution one adds 106 cc ammonia NH₃ at 28% and distilled water until reaching 1000 cc. One stores the concentrated solution 2 in a dark glass bottle. Reducing solution 3;
   6d) Into a container one pours 3000cc distilled water and 90 g cane sugar, bringing to boil with a lid on the container. One then leaves to cool. One adds 13 cc formaldehyde at 40% and 5 cc nitric acid HNO₃. One pours into a 5-litre container the prepared reducing solution. One pours into another container already filled with 2250 cc distilled water, 108 cc of the solution 1 and 94cc of the solution 2;
   7d) From the two containers the two products are sucked by means of a pneumatic two-nozzle spray gun that nebulises the two components and allows to separate the silver on the surface of the moulded grooved cylinder (19), making the whole sprayed surface conductive;
   8d) Electroforming in the bath of copper with sulphuric acid solution, for four hours in order to reach on the external surface (diameter) of the moulded grooved cylinder (19) a thickness of 0.25 mm;
   9d) Reactivation of the cylinder before the nickel electroforming for about eight minutes, in a solution made up of 1000cc distilled water H₂O, 50cc sulphuric acid H₂SO₄ and 5 cc 130-volume hydrogen peroxide;
   10d) Rinsing the moulded grooved cylinder (19) with running water for three times;
   11 d) Electroforming in the bath of nickel with fluoborate, with the addition of a hardener called toluene sulfonamide 0.044 grams per litre. The temperature of the bath must be of 43 C°. The moulded grooved cylinder (19) must remain in the bath for four hours in order to reach on the external surface (diameter) a thickness of about 0.15 mm, with a hardness equal to or greater than 45 HRC;
   12d) Hard chromium plating by galvanic process with a thickness of 20-30 microns and a hardness of the external diameter equal to or greater than 65 HRC.
   13d) Final visual control and balancing check with a balancing machine according to the values required on the moulded grooved cylinder (19) by the technical specifications.

The treatment described and provided on the moulded grooved cylinder (19) in resin makes the whole surface to be treated conductive, by means of the application of a silver sulphate film. On this surface is then laid a copper layer that allows to receive the thickness layer of hard nickel that one wants to apply. As for the cylinder, being it difficult to manage to lay on the screw bottom a suitable nickel thickness, it was necessary to provide on the external surface a nickel thickness equal to at least 0.15 mm in such a way as to ensure at least some hard nickel microns on the groove bottoms. To eliminate the wear due to the dragging of the reel on the external surface of said cylinder (19), there is also the application of 20÷30 microns hard chromium on the latter. The wear problems that also occur on the top and tail ends and on the screw crossings are solved by said overmoulding of two tempered metal inserts in the ends (13, 14), and by gluing the inserts (20, 21, 22) on the pockets generated on the piece by the silicone rubber cavity (10).

### Reference

(1) Upper flange forming the top base of the cylinder.
(2) Lower flange forming the tail base of the cylinder.
(3) Conical pin for forming the keying seat of the cylinder for the driving aisle of the spooling machine. On this pin it is possible to position a finished bush, which will be overmoulded by the compound cast into the mould.
(4) Central body of the mould, with the internal diameter being 6 mm greater than the external diameter of the sample cylinder, so that the RTV silicone rubber cavity has a thickness of 3 mm in the cylindrical binder, which makes the demoulding operation possible.
(5) Sample cylinder with centering hole and with pockets in the crossings of the screws for housing the inserts.
(6) Pin for phasing the sample cylinder with the mould.
(7) Hole for injecting silicone rubber into the mould.
(8) Air outlet vents from the mould in the casting phase of the RTV silicone rubber.
(9) Mould
(10) Single-piece RTV silicone rubber cavity turned over after demoulding.
(11) Sector for balancing release on the moulded cylinder.
(12) Sector for balancing release on the moulded cylinder.
(13) Tempered plate insert to be positioned on the top end (negative) of the silicone rubber cavity.
(14) Tempered plate insert to be positioned on the tail end (negative) of the RTV silicone rubber cavity.
(15) Casting hole of the polyurethane resin compound filled with aggregate.
(16) Electric motor for the rotation of the mould with inverter
(17) Joint for positioning and rotating the mould for centrifugation.
(18) Support with rotating live centre to perform the rotation of the mould safely.
(19) Moulded cylinder in polyurethane compound.
(20) Ceramic insert for the first screw crossing.
(21) Ceramic insert for the second screw crossing.
(22) Ceramic insert for the third screw crossing.
(190) Thread-guiding screws.

## Claims

1. Method for producing a thread-guiding grooved cylinder for spooling machines in the textile industry, **characterised in that** it requires at least the following phases:
a) moulding a RTV silicone rubber cavity (10), contained in the casting mould (9);
b) subsequent moulding of the thread-guiding grooved cylinder (19) by injection casting of resin filled with aggregates into the casting mould (9) that contains said RTV silicone rubber cavity (10), centrifugation in the mould (9), and catalysis;
c) demoulding, removal of the RTV silicone cavity (10) from the moulded thread-guiding grooved cylinder (19);
d) the application in correspondence of the surface of the moulded thread-guiding grooved cylinder (19) of a wear-resistant coating.

2. Method for producing a thread-guiding grooved cylinder for spooling machines in the textile industry, according to claim 1, **characterised in that** phase (a) requires the previous moulding of the RTV silicone rubber cavity (10), by means of the mould (9) into which one inserts a sample thread-guiding grooved cylinder (5), then one injects the silicon rubber with a specific catalyst, one waits for cross-linking and, after removing the sample thread-guiding grooved cylinder (5) from the mould (9), carries out the demoulding of the silicone rubber cavity (10) whose hardness is comprised between 20 and 40 Shore A, removing it from said sample thread-guiding grooved cylinder (5).

3. Method for producing a thread-guiding grooved cylinder for spooling machines in the textile industry, according to claim 1 or 2, **characterized in that** in the moulding phase (b) the resin is catalyzed polyurethane resin filled at 70% ± 5% with aluminium hydroxide.

4. Method for producing a thread-guiding grooved cylinder for spooling machines in the textile industry, according to any of the previous claims, **characterised in that** in phase (d) the wear-resistant coating of the moulded thread-guiding grooved cylinder (19) is of hard nickel obtained by electroforming with overlap of hard chromium.

5. Method for producing a thread-guiding grooved cylinder for spooling machines in the textile industry, according to any of the previous claims, **characterised in that** in phase (b) the moulding of the moulded thread-guiding grooved cylinder (19) is complete of overmoulded inserts (13, 14).

6. Method for producing a thread-guiding grooved cylinder for spooling machines in the textile industry, according to any of the previous claims, **characterised in that** after said phase (c) it is required, in correspondence of pockets of crossings of screws (190), to glue crossing inserts (20, 21, 22) of the moulded thread-guiding grooved cylinder (19).

7. Method for producing a thread-guiding grooved cylinder for spooling machines in the textile industry, according to claim 4, **characterised in that** phase d) before electroforming requires the prearrangement of the surface of the moulded grooved cylinder (19) performing a mordanting operation.

8. Method for producing a thread-guiding grooved cylinder for spooling machines in the textile industry, according to claim 7, wherein the surface of the thread-guiding grooved cylinder (19) to be treated by electroforming is made conductive by means of the application of a silver sulphate film.

9. Method for producing a thread-guiding grooved cylinder for spooling machines in the textile industry, according to any of the previous claims, **characterised in that** in phase d) electroforming requires the laying on the external surface of the moulded grooved cylinder (19) of a nickel thickness equal to at least 0.15 mm and afterwards a galvanic chromium plating process with the overlap of 20÷30 microns hard chromium.

10. Thread-guiding grooved cylinder for spooling machines in the textile industry, **characterised in that** the moulded thread-guiding grooved cylinder (19) is in resin filled with aggregates, which integrates inserts (13, 14, 20, 21, 22), said moulded thread-guiding grooved cylinder (19) being finished with a wear-resistant nickel coating with the overlap of hard chromium.

11. Thread-guiding grooved cylinder for spooling machines in the textile industry according to claim 10, **characterised in that** the moulded thread-guiding grooved cylinder (19) is in polyurethane resin filled with aluminium hydroxide, which integrates inserts (13, 14, 20, 21, 22), said moulded thread-guiding grooved cylinder (19) being finished with a wear-resistant nickel coating having a thickness at least equal to 0.15 mm with the overlap of 20÷30 microns hard chromium.

12. Thread-guiding grooved cylinder for spooling machines in the textile industry according to claim 10 or 11, **characterised in that** the moulded thread-guiding grooved cylinder (19) has a very compact crown of compound on the external crown of the moulded grooved cylinder (19) with much filler and very little resin, while at the centre of the moulded grooved cylinder (19) there is a compound with much resin and little filler.

13. Thread-guiding grooved cylinder for spooling machines in the textile industry according to claim 11, **characterised in that** the hardness of the external diameter of the moulded thread-guiding grooved cylinder (19) is equal to or greater than 65 HRC.

## Patentansprüche

1. Verfahren zum Herstellen eines fadenführenden genuteten Zylinders für Wickelmaschinen in der Textilindustrie, **dadurch gekennzeichnet, dass** dieses zumindest die folgenden Phasen erfordert:
a) Gießen einer RTV Gummisilikonkavität (10), die in der Gussform (9) enthalten ist;
b) anschließendes Gießen des fadenführenden genuteten Zylinders (19) durch Spritzgießen von Kunstharz, das mit Zuschlägen gefüllt ist, in die Gussform (9), welche die RTV Gummisilikonkavität (10) enthält, Zentrifugieren in der Form (9), und Katalyse;
c) Entformen, Entfernen der RTV Gummisilikonkavität (19) von dem fadenführenden genuteten Zylinder (19);
d) das Aufbringen einer verschleißresistenten Beschichtung in Übereinstimmung mit der Oberfläche des gegossenen fadenführenden genuteten Zylinders (19).

2. Verfahren zum Herstellen eines fadenführenden genuteten Zylinders für Wickelmaschinen in der Textilindustrie, gemäß Anspruch 1, **dadurch gekennzeichnet, dass** Phase (a) das vorausgehende Gießen der RTV Gummisilikonkavität (10) mittels der Form (9) erfordert, in die man einen fadenführenden genuteten Musterzylinder (5) einsetzt, man dann das Gummisilikon mit einem bestimmten Katalysator einspritzt, man auf die Vernetzung wartet und nach dem Entfernen des fadenführenden genuteten Musterzylinders (5) aus der Form (9) das Entformen der Gummisilikonkavität (10), deren Härte zwischen 20 und 40 Shore A beträgt, durch Entfernen der Gummisilikonkavität (10) von dem genannten fadenführenden genuteten Musterzylinder (5) durchführt.

3. Verfahren zum Herstellen eines fadenführenden genuteten Zylinders für Wickelmaschinen in der Textilindustrie, gemäß Ansprüchen 1 oder 2, **dadurch gekennzeichnet, dass** in der Guss-Phase (b) das Kunstharz katalysiertes Polyurethanharz ist, das mit 70% ± 5% Aluminiumhydroxid gefüllt ist.

4. Verfahren zum Herstellen eines fadenführenden genuteten Zylinders für Wickelmaschinen in der Textilindustrie, gemäß einem der vorangehenden Ansprüche, **dadurch gekennzeichnet, dass** in Phase (d) die verschleißresistente Beschichtung des fadenführenden genuteten Zylinders (19) aus Chemisch Nickel besteht, der durch Galvanoformen mit Überlagerung von Hartchrom erhalten wird.

5. Verfahren zum Herstellen eines fadenführenden genuteten Zylinders für Wickelmaschinen in der Textilindustrie, gemäß einem der vorangehenden Ansprüche, **dadurch gekennzeichnet, dass** in Phase (b) das Gießen des gegossenen fadenführenden genuteten Zylinders (19) komplett mit umgossenen Einsätzen (13, 14) ist.

6. Verfahren zum Herstellen eines fadenführenden genuteten Zylinders für Wickelmaschinen in der Textilindustrie, gemäß einem der vorangehenden Ansprüche, **dadurch gekennzeichnet, dass** es nach der genannten Phase (c) erforderlich ist, Kreuzungseinsätze (20, 21, 22) des gegossenen fadenführenden genuteten Zylinders (19), in Übereinstimmung mit Taschen von kreuzenden Schraubenlinien (190), zu verkleben.

7. Verfahren zum Herstellen eines fadenführenden genuteten Zylinders für Wickelmaschinen in der Textilindustrie, gemäß Anspruch 4, **dadurch gekennzeichnet, dass** Phase d) die Vorbereitung der Oberfläche des gegossenen genuteten Zylinders (19) durch einen Beizvorgang vor der Galvanoformung erfordert.

8. Verfahren zum Herstellen eines fadenführenden genuteten Zylinders für Wickelmaschinen in der Textilindustrie, gemäß Anspruch 7, wobei die Oberfläche des fadenführenden genuteten Zylinders (19), die durch Galvanoformen zu behandeln ist, durch Auftragen einer Silbersulfatschicht leitfähig gemacht wird.

9. Verfahren zum Herstellen eines fadenführenden genuteten Zylinders für Wickelmaschinen in der Textilindustrie, gemäß einem der vorangehenden Ansprüche, **dadurch gekennzeichnet, dass** das Galvanoformen in Phase d) das Auftragen von Nickel in einer Dicke, die zumindest 0.15 mm entspricht, und anschließend ein galvanisches Hartverchromen mit der Überlagerung von 20 - 30 Mikrometer auf der äußeren Oberfläche des gegossenen genuteten Zylinders (19) erfordert.

10. Fadenführender genuteter Zylinder für Wickelmaschinen in der Textilindustrie, **dadurch gekennzeichnet, dass** der gegossene fadenführende genutete Zylinder (19) aus Kunstharz mit Zuschlägen besteht, das Einsätze (13, 14, 20, 21, 22) einbindet, wobei der genannte gegossene fadenführende genutete Zylinder (19) mit einer verschleißresistenten Nickelbeschichtung mit der Überlagerung von Hartchrom fertiggestellt wird.

11. Fadenführender genuteter Zylinder für Wickelmaschinen in der Textilindustrie nach Anspruch 10, **dadurch gekennzeichnet, dass** der gegossene fadenführende genutete Zylinder (19) aus Polyurethanharz, das mit Aluminiumhydroxid gefüllt ist, besteht, das Einsätze (13, 14, 20, 21, 22) einbindet, wobei der genannte gegossene fadenführende genutete Zylinder (19) mit einer verschleißresistenten Nickelbeschichtung, die eine Dicke, die zumindest 0.15 mm entspricht, aufweist, mit der Überlagerung von 20 - 30 Mikrometer von Hartchrom fertiggestellt wird.

12. Fadenführender genuteter Zylinder für Wickelmaschinen in der Textilindustrie nach Ansprüchen 10 oder 11, **dadurch gekennzeichnet, dass** der gegossene fadenführende genutete Zylinder (19) eine sehr kompakte Krone von Verbundstoff an der äußeren Krone des gegossenen genuteten Zylinders (19) mit viel Füller und sehr wenig Kunstharz aufweist, während im Zentrum des gegossenen genuteten Zylinders (19) ein Verbundstoff mit viel Kunstharz und wenig Füller vorhanden ist.

13. Fadenführender genuteter Zylinder für Wickelmaschinen in der Textilindustrie nach Anspruch 11, **dadurch gekennzeichnet, dass** die Härte des äußeren Durchmessers des gegossenen fadenführenden genuteten Zylinders (19) gleich oder größer als 65 HRC ist.

## Revendications

1. Procédé de production d'un cylindre rainuré de guidage de fil pour machines à bobiner dans l'industrie textile, **caractérisé en ce qu'**il nécessite au moins les phases suivantes :
a) le moulage d'une empreinte en caoutchouc de silicone RTV (10), contenue dans le moule de coulée (9) ;
b) le moulage ultérieur du cylindre rainuré de guidage de fil (19) par la coulée par injection d'une résine chargée avec des agrégats dans le moule de coulée (9) qui contient ladite empreinte en caoutchouc de silicone RTV (10), la centrifugation dans le moule (9), et la catalyse ;
c) le démoulage, le retrait de l'empreinte en caoutchouc de silicone RTV (10) du cylindre rainuré de guidage de fil moulé (19) ;
d) l'application d'un revêtement résistant à l'usure en correspondance avec la surface du cylindre rainuré de guidage de fil moulé (19).

2. Procédé de production d'un cylindre rainuré de guidage de fil pour machines à bobiner dans l'industrie textile, selon la revendication 1, **caractérisé en ce que** la phase (a) nécessite le moulage antérieur de l'empreinte en caoutchouc de silicone RTV (10), au moyen du moule (9) dans lequel on insère un cylindre rainuré de guidage de fil échantillon (5), puis on injecte le caoutchouc de silicone avec un catalyseur spécifique, on attend la réticulation et, après le retrait du cylindre rainuré de guidage de fil échantillon (5) du moule (9), on effectue le démoulage de l'empreinte en caoutchouc de silicone (10) dont la dureté est comprise entre 20 et 40 Shore A, le retrait de celle-ci du cylindre rainuré de guidage de fil échantillon (5).

3. Procédé de production d'un cylindre rainuré de guidage de fil pour machines à bobiner dans l'industrie textile, selon la revendication 1 ou 2, **caractérisé en ce que** dans la phase de moulage (b) la résine est une résine de polyuréthane catalysée chargée à 70% ± 5% avec de l'hydroxyde d'aluminium.

4. Procédé de production d'un cylindre rainuré de guidage de fil pour machines à bobiner dans l'industrie textile, selon l'une des revendications précédentes, **caractérisé en ce que** dans la phase (d) le revêtement résistant à l'usure du cylindre rainuré de guidage de fil moulé (19) est réalisé en nickel dur obtenu par électroformage avec une superposition de chrome dur.

5. Procédé de production d'un cylindre rainuré de guidage de fil pour machines à bobiner dans l'industrie textile, selon l'une des revendications précédentes, **caractérisé en ce que** dans la phase (b) le moulage du cylindre rainuré de guidage de fil moulé (19) est complet d'inserts surmoulés (13, 14).

6. Procédé de production d'un cylindre rainuré de guidage de fil pour machines à bobiner dans l'industrie textile, selon l'une des revendications précédentes, **caractérisé en ce que**, après ladite phase (c), il est nécessaire, en correspondance avec des poches de croisements de vis (190), de coller des inserts de croisement (20, 21, 22) du cylindre rainuré de guidage de fil moulé (19).

7. Procédé de production d'un cylindre rainuré de guidage de fil pour machines à bobiner dans l'industrie textile, selon la revendication 4, **caractérisé en ce que** la phase d) avant l'électroformage nécessite le pré-agencement de la surface du cylindre rainuré moulé (19) exécutant une opération de mordançage.

8. Procédé de production d'un cylindre rainuré de guidage de fil pour machines à bobiner dans l'industrie textile, selon la revendication 7, dans lequel la surface du cylindre rainuré de guidage de fil (19) à traiter par électroformage est rendue conductrice par l'application d'un film de sulfate d'argent.

9. Procédé de production d'un cylindre rainuré de guidage de fil pour machines à bobiner dans l'industrie textile, selon l'une des revendications précédentes, **caractérisé en ce que** dans la phase d) l'électroformage nécessite le dépôt d'une épaisseur de nickel égale à au moins 0,15 mm sur la surface externe du cylindre rainuré moulé (19) et ensuite un procédé de placage au chrome galvanique avec la superposition de 20 à 30 microns de chrome dur.

10. Cylindre rainuré de guidage de fil pour machines à bobiner dans l'industrie textile, **caractérisé en ce que** le cylindre rainuré de guidage de fil moulé (19) est en résine chargée avec des agrégats, qui intègre des inserts (13, 14, 20, 21, 22), ledit cylindre rainuré de guidage de fil moulé (19) étant fini avec un revêtement de nickel résistant à l'usure avec la superposition du chrome dur.

11. Cylindre rainuré de guidage de fil pour machines à bobiner dans l'industrie textile selon la revendication 10, **caractérisé en ce que** le cylindre rainuré de guidage de fil moulé (19) est réalisé en résine de polyuréthane chargée avec de l'hydroxyde d'aluminium, qui intègre des inserts (13, 14, 20, 21, 22), ledit cylindre rainuré de guidage de fil moulé (19) étant fini avec un revêtement de nickel résistant à l'usure ayant une épaisseur égale à au moins 0,15 mm avec la superposition de 20 à 30 microns de chrome dur.

12. Cylindre rainuré de guidage de fil pour machines à bobiner dans l'industrie textile selon la revendication 10 ou 11, **caractérisé en ce que** le cylindre rainuré de guidage de fil moulé (19) a une couronne très compacte d'un composé sur la couronne externe du cylindre rainuré moulé (19) avec beaucoup de charge et très peu de résine, tandis qu'au centre du cylindre rainuré moulé (19) il existe un composé avec beaucoup de résine et peu de charge.

13. Cylindre rainuré de guidage de fil pour machines à bobiner dans l'industrie textile selon la revendication 11, **caractérisé en ce que** la dureté du diamètre externe du cylindre rainuré de guidage de fil moulé (19) est supérieure ou égale à 65 HRC.
